# EUROPÄISCHE PATENTSCHRIFT

(11) **EP 0 593 816 B1**
(45) Veröffentlichungstag und Bekanntmachung des Hinweises auf die Patenterteilung: **16.04.1997**
(21) Anmeldenummer: 92118170.7
(22) Anmeldetag: 23.10.1992
(51) Int. Cl.: F23D 14/46, F23D 11/36, F02C 7/266, F23Q 3/00

(54) **Brenner mit elektrischer Zündeinrichtung**
Burner with electric ignition device
Brûleur avec dispositif d'allumage électrique

(43) Veröffentlichungstag der Anmeldung: 27.04.1994
(73) Patentinhaber: ASEA BROWN BOVERI AG, 5401 Baden (CH)
(72) Erfinder: Lang, Werner, W-7897 Rheinheim (DE)
(74) Vertreter: Klein, Ernest

(56) Entgegenhaltungen:
- EP-A- 0 210 462
- EP-A- 0 321 809
- EP-A- 0 521 325
- PATENT ABSTRACTS OF JAPAN vol. 8, no. 108 (M-297)(1545) 19. Mai 1984 & JP-A-59 18 238 (NISSAN)

## Beschreibung

### TECHNISCHES GEBIET

Die Erfindung geht aus von einem Brenner mit elektrischer Zündeinrichtung gemäss dem Oberbegriff des Anspruchs 1.

### STAND DER TECHNIK

Aus der Patentschrift EP 0 321 809 ist ein Brenner mit zwei Teilkegelkörpern bekannt. Dieser Brenner weist zwei tangential ausgerichtete Einströmspalte für Luft auf. Im Bereich der Einströmspalte wird der Luft mittels Einströmöffnungen fluidisierter Brennstoff zugemischt. Es kann flüssiger, staubförmiger oder gasförmiger Brennstoff zugemischt werden.

Bei zylindrisch oder kegelförmig ausgebildeten Brennern, die mittels Zündkerzen elektrisch gezündet werden, ist die Zündeinrichtung in der Regel seitlich versetzt von der Brennerachse im Bereich zwischen dem zentralen Eintritt des Brennstoffs und der Flammenfront angeordnet. Insbesondere bei Flugzeugtriebwerken ist diese Art der Anordnung der Zündeinrichtung üblich. Diese Anordnung weist den Nachteil auf, dass die Zündkerzen nahe der heissesten Zone des Brenners einer intensiven Wärmebeanspruchung ausgesetzt sind, die deren Lebensdauer zu reduzieren vermag. Zudem muss in diesem Fall die Arbeitstemperatur des Brenners vergleichsweise niedrig eingestellt werden, um die Zündkerzen thermisch nicht zu überlasten.

### DARSTELLUNG DER ERFINDUNG

Hier will die Erfindung Abhilfe schaffen. Die Erfindung, wie sie in den unabhängigen Ansprüchen gekennzeichnet ist, löst die Aufgabe, einen Brenner mit elektrischer Zündeinrichtung zu schaffen, bei dem die Zündkerzen besser gegen thermische Belastung geschützt sind, sodass der Brenner mit höheren Arbeitstemperaturen betrieben werden kann.

Die durch die Erfindung erreichten Vorteile sind im wesentlichen darin zu sehen, dass der mit höherer Arbeitstemperatur betriebene Brenner einen deutlich erhöhten Wirkungsgrad aufweist. Ferner zeigt es sich, dass die Verschmutzung der Elektroden der Zündkerzen während des Betriebs wesentlich geringer ist, wodurch deren Standfestigkeit vorteilhaft erhöht wird.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 einen Teilschnitt durch einen ersten erfindungsgemässen Brenner,
Fig.2 einen Teilschnitt durch einen zweiten erfindungsgemässen Brenner, und
Fig.3 einen Teilschnitt durch einen dritten erfindungsgemässen Brenner.

Bei allen Figuren sind gleich wirkende Elemente mit gleichen Bezugszeichen versehen.

### WEGE ZUR AUSFÜHRUNG DER ERFINDUNG

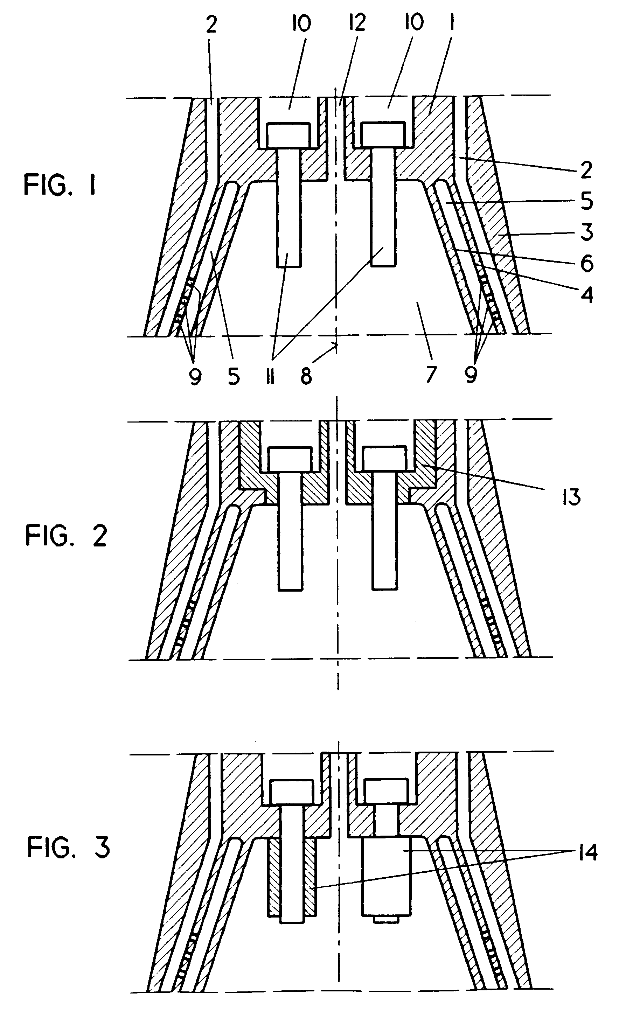

Die Fig.1 zeigt einen Teilschnitt durch einen Doppelkegelbrenner, und zwar ist lediglich der Bereich um den Scheitel des Brenners schematisch dargestellt. Der Brenner weist ein sich nach unten öffnendes Brennergehäuse 1 auf, durch welches mindestens ein Brennstoffkanal 2 führt, der gegen aussen durch eine Wand 3 abgeschlossen ist und den eine Zwischenwand 4 von einem Verbrennungsluftkanal 5 trennt. Der Verbrennungsluftkanal 5, der hier im Schnitt noch durch eine Trennwand 6 vom eigentlichen Brennraum 7 abgetrennt ist, öffnet sich in diesen Brennraum 7 in der bekannten Form von zwei tangential ausgerichteten Einströmspalten. Diese Einströmspalten sind hier der besseren Übersichtlichkeit halber nicht dargestellt. Der Brenner weist eine Mittelachse 8 auf. In die Zwischenwand 4 sind Einströmöffnungen 9 eingelassen, die Brennstoff aus dem Brennstoffkanal 2 in den brennungsluftkanal 5 führen, wo er der Verbrennungsluft zugemischt wird. In das Brennergehäuse 1 sind zwei Bohrungen 10 eingelassen, in die jeweils eine Zündkerze 11 druckdicht eingeschraubt ist. Die Zündkerzen 11 ragen in den Brennraum 7 vor, sodass deren nicht dargestellte, am unteren Ende liegenden Zündelektroden Zündfunken in den Brennraum 7 abgeben können. Die Versorgung der Zündkerzen 11 mit elektrischer Energie wird hier nicht näher beschrieben, da derartige, in der Regel explosionssicher ausgeführte Energieversorgungen zum Stand der Technik gehören.Die Zündkerzen 11 können unabhängig voneinander, gleichzeitig oder alternierend mit Zündenergie gespeist werden, sodass stets, also auch beim Ausfall einer der Zündkerzen 11, ein Zündfunke erzeugt wird. Die Energieversorgung ist so ausgebildet, dass eine optische Kontrolle die Zündfunken anzeigt. Der Ausfall einer der Zündkerzen 11 kann so rechtzeitig erkannt werden und der Wechsel der defekten Zündkerze 11 in einer vom Betriebsablauf der Anlage her gesehen günstigen Periode kann vorbereitet werden.

Bei einer besonderen Ausführung des Brenners führt eine zusätzliche Bohrung 12 durch das Brennergehäuse 1 brennbares Gas in den Bereich der Zündkerzen 11 ein, wodurch in diesem Bereich besonders zuverlässig ein zündfähiges Gasgemisch entsteht. Die zusätzliche Bohrung 12 steht mit dem Brennstoffkanal 2 in Wirkverbindung. Die zusätzliche Bohrung 12 kann auch aus mehreren Bohrungen bestehen, die verteilt über den Scheitelbereich des Brenners einmünden. Die zusätzliche Bohrung 12 braucht nicht, wie hier gezeigt, in Richtung der Mittelachse 8 des Brennergehäuses 1 einzumünden, sie kann auch in einem Winkel zu dieser einmünden. Ebenso ist es möglich, die zusätzliche Bohrung 12 durch die Trennwand 6 weiter nach unten zu führen und sie erst in der Nähe der Zündelektroden in den Brennraum 7 einmünden zu lassen.

Bei einem mit Gas betriebenen Brenner führt das Verhältnis zwischen der Summe der Querschnitte der Einströmöffnungen 9 und dem Querschnitt der zusätzlichen Bohrung 12 von 50 besonders rasch und zuverlässig zu einem zündfähigen Gemisch. Versuche zeigten, dass ein Verhältnis im Bereich zwischen 30 und 60 für ein einwandfreies Funktionieren der Zündeinrichtung nötig ist. Wird ein Vehältnis unterhalb des angegebenen Bereichs eingestellt, so wird die Flammenausbildung im Brenner gestört, während ein Verhältnis oberhalb dieses Bereiches zu einem unsicheren Zündverhalten der Anordnung führt. Werden gasförmige Brennstoffe mit anderen Heizwerten oder einer anderen Konsistenz eingesetzt, so sollte, um ein optimales Betriebsverhalten zu erreichen, das Querschnittsverhältnis entsprechend angepasst werden.

In Fig.2 ist ein gegenüber dem in Fig.1 dargestellten Brenner etwas modifizierter Brenner schematisch dargestellt. Die Zündkerzen 11 sind in einer Halterung 13 montiert, welche die gleiche Mittelachse 8 aufweist wie das Brennergehäuse 1. Die Bohrungen 10 sind in diesem Fall in die Halterung 13 eingelassen. Diese Halterung 13 ist gasdicht in das Brennergehäuse 1 eingesetzt und sie kann bei Revisionen ohne eine Demontage des Brenners von diesem getrennt und ausgefahren werden. Eine etwaige Gasversorgung für die zusätzliche Bohrung 12 und auch die Energieversorgung für die Zündkerzen 11 sind mit der Halterung 13 verbunden und werden mit dieser gemeinsam demontiert. Je nach Bauart des Brenners kann die Halterung 13 auch lanzenartig ausgebildet sein.

In Fig.3 ist ein Teilschnitt durch einen Brenner dargestellt, bei dem die Zündkerzen 11 durch eine Abdeckung 14 gegen thermische Einflüsse geschützt werden. Die Abdeckung 14 kann verschieden ausgebildet sein, so ist es beispielsweise möglich, die beiden Abdeckungen 14 zu einem gemeinsamen Block zusammenzufassen oder sie so auszubilden, dass sie die Zündkerzen 11 nur an den besonders exponierten Stellen teilweise abdecken.

Der Brenner wird in der Regel mit vorverdichteter Luft gespeist, welcher der Brennstoff zugemischt wird. Es kann flüssiger, staubförmiger oder gasförmiger Brennstoff zugemischt werden. Die Flammenfront des Brenners liegt bei dieser Bauart genügend weit unterhalb der Zündkerzen 11, sodass diese thermisch nicht überlastet werden können.

Diese Brennerausführung ist besonders geeignet als Zündbrenner im Zentrum einer Silobrennkammer, bei welcher die anderen Brenner den zentralen Zündbrenner wabenförmig umgeben. Es ist jedoch auch möglich, diesen Brenner als Zündbrenner in einer Ringbrennkammer einzusetzen.

Zur Erläuterung der Wirkungsweise wird die Zeichnung, insbesondere die Fig.1 näher betrachtet. Beim Anfahren wird zunächst vorverdichtete Luft dem Brenner durch den Verbrennungsluftkanal 5 zugeführt. Gleichzeitig mit dem Beginn der Brennstoffeinspeisung wird auch die Energieversorgung der Zündkerzen 11 eingeschaltet. Sobald ein zündfähiges Brennstoff-Luft-Gemisch im Brennraum 7 erreicht wird, zündet der Brenner und die Flammenfront der Zündflamme wandert im Brennraum 7 nach unten und tritt aus diesem aus. Die Bildung des Brennstoff-Luft-Gemisches wird durch Gas, welches durch die zusätzliche Bohrung 12 eingespeist wird, vorteilhaft beschleunigt. Sobald sich eine stabile Zündflamme ausgebildet hat, werden auch die übrigen Brenner mit Verbrennungsluft und mit Brennstoff angespeist und zünden dann ebenfalls. Bei grösseren Anlagen ist es möglich, die übrigen Brenner auch einzeln oder gruppenweise zuzuschalten. Nach erfolgter Zündung der übrigen Brenner wird die Zündeinrichtung in der Regel ausgeschaltet. Der Brenner wird dann entweder als normaler Brenner zusammen mit den übrigen Brennern weiterbetrieben oder die Brennstoffzufuhr zu ihm wird unterbrochen, sodass er erlischt, dabei strömt jedoch weiterhin Luft durch den Verbrennungsluftkanal 5 und sorgt dafür, dass der Brenner und mit ihm die Zündkerzen 11 thermisch nicht überlastet werden. Werden die übrigen Brenner jedoch mit einem anderen, beispielsweise einem flüssigen Brennstoff betrieben, so wird für den Zündbrenner eine separate Gasversorgung vorgesehen, beispielsweise mit Propangas. Diese separate Gaseinspeisung wird in der Regel nach einer erfolgreichen Zündung der übrigen Brenner abgestellt.

### BEZEICHNUNGSLISTE

- 1: Brennergehäuse
- 2: Brennstoffkanal
- 3: Wand
- 4: Zwischenwand
- 5: Verbrennungsluftkanal
- 6: Trennwand
- 7: Brennraum
- 8: Mittelachse 8
- 9: Einströmöffnungen
- 10: Bohrungen
- 11: Zündkerze
- 12: Bohrung
- 13: Halterung
- 14: Abdeckung

## Patentansprüche

1. Brenner mit einer zentral im Scheitelbereich des Brennraums (7) angeordneten elektrischen Zündeinrichtung, der für den Betrieb einer Brennkraftmaschine oder für eine Brennkammer einer Gasturbinengruppe oder für eine Feuerungsanlage vorgesehen ist, und der aus zwei hohlen Teilkegelkörpern gebildet ist, deren Längsachsen parallel und gegeneinander versetzt verlaufen, sodass tangentiale Einströmspalte für die in den kegelförmigen Brennraum (7) durch einen Verbrennungsluftkanal (5) zugeführte Verbrennungsluft gebildet werden, der im Bereich der Einströmspalte Einströmöffnungen (9) aufweist durch welche von einem Brennstoffkanal (2) her Brennstoff eingespeist und der Verbrennungsluft zugemischt wird, wobei
im Bereich um die Zündeinrichtung mindestens eine zusätzliche Bohrung (12) vorgesehen ist.

2. Brenner nach Anspruch 1, dadurch gekennzeichnet,
- dass die Zündeinrichtung mindestens zwei Zündkerzen (11) aufweist, die gleichzeitig oder alternierend mit Zündenergie beaufschlagt werden,
- dass jede der mindestens zwei Zündkerzen (11) mit einem separaten Zündkreis versehen ist, und
- dass die Zündkreise unabhängig voneinander arbeiten.

3. Brenner nach Anspruch 2, dadurch gekennzeichnet,
- dass er als einzelner Brenner oder als Zündbrenner für eine Silobrennkammer oder als Zündbrenner für eine Ringbrennkammer ausgelegt ist.

4. Brenner nach einem der Ansprüche 2 oder 3, dadurch gekennzeichnet,
- dass die Zündkerzen (11) zumindest teilweise mit einer Abdeckung (14) versehen sind, und
- dass diese Abdeckung (14) mehrteilig oder als monolithischer Block ausgeführt ist.

5. Brenner nach Anspruch 1, dadurch gekennzeichnet,
- dass das Verhältnis zwischen der Summe der Querschnitte der Einströmöffnungen (9) und dem Querschnitt der mindestens einen zusätzlichen Bohrung (12) im Bereich zwischen 30 und 60 insbesondere jedoch bei 50 liegt.

## Claims

1. Burner with an electric ignition device arranged centrally in the vertex region of the combustion chamber (7), which burner is intended for the operation of an internal combustion engine or for a combustion chamber of a gas turbine set or for a furnace installation and which is formed by two hollow conical part bodies whose longitudinal axes extend parallel with a mutual offset, so that tangential inflow slots for the combustion air fed into the conical combustion chamber (7) through a combustion air duct (5) are formed, which duct has, in the region of the inflow slots, inflow orifices (9) through which fuel is fed in from a fuel duct (2) and mixed with the combustion air,
wherein at least one additional bore (12) is provided in the region around the ignition device.

2. Burner according to Claim 1, characterized in that
- the ignition device has at least two spark plugs (11) to which ignition energy is supplied simultaneously or alternately,
- each of the at least two spark plugs (11) is provided with a separate ignition circuit and
- the ignition circuits operate independently of one another.

3. Burner according to Claim 2, characterized in that
- it is designed as a single burner or as pilot burner for a silo combustion chamber or as a pilot burner for an annular combustion chamber.

4. Burner according to one of Claims 2 or 3, characterized in that
- the spark plugs (11) are provided at least partially with a sheath (14) and
- this sheath (14) is made from a plurality of parts or as a monolithic block.

5. Burner according to Claim 1, characterized in that
- the ratio between the sum of the cross-sections of the inflow orifices (9) and the cross-section of the at least one additional bore (12) is within the range between 30 and 60, but especially is 50.

## Revendications

1. Brûleur avec un dispositif d'allumage électrique disposé au centre dans la région du sommet du cône de l'espace de combustion (7), qui est prévu pour la conduite d'un moteur à combustion interne ou pour une chambre de combustion d'un turbogroupe à gaz ou pour une installation de chauffe, et qui est formé par deux corps coniques partiels creux, dont les axes longitudinaux sont parallèles et décalés l'un par rapport à l'autre, de façon telle qu'il se forme des fentes d'entrée tangentielles pour l'air de combustion introduit dans l'espace de combustion conique (7) par un canal d'air de combustion (5), qui présente dans la région des fentes d'entrée des ouvertures d'entrée (9) par lesquelles un combustible est fourni à partir d'un canal de combustible (2) et mélangé à l'air de combustion, dans lequel il est prévu au moins un trou supplémentaire (12) dans la région entourant le dispositif d'allumage.

2. Brûleur suivant la revendication 1, caractérisé en ce que
- le dispositif d'allumage présente au moins deux bougies (11), qui sont alimentées en énergie simultanément ou en alternance;
- chacune de ces au moins deux bougies (11) est pourvue d'un circuit d'allumage séparé; et
- les circuits d'allumage travaillent indépendamment l'un de l'autre.

3. Brûleur suivant la revendication 2, caractérisé en ce que
- il est conçu comme brûleur isolé ou comme brûleur d'allumage pour une chambre de combustion en silo ou comme brûleur d'allumage pour une chambre de combustion en anneau.

4. Brûleur suivant l'une quelconque des revendications 2 ou 3, caractérisé en ce que
- les bougies (11) sont au moins en partie pourvues d'un couvercle (14); et
- ce couvercle (14) est réalisé en plusieurs parties ou en un bloc monolithique.

5. Brûleur suivant la revendication 1, caractérisé en ce que
- le rapport entre la somme des sections des ouvertures d'entrée (9) et la section dudit au moins un trou supplémentaire (12) est situé dans la gamme entre 30 et 60, en particulier cependant vers 50.
